# EUROPEAN PATENT SPECIFICATION

(11) **EP 2 576 714 B1**
(45) Date of publication and mention of the grant of the patent: **24.09.2014**
(21) Application number: 11727024.9
(22) Date of filing: 02.06.2011
(51) Int. Cl.: C09D 133/08

(54) **INK/DYE RECEPTIVE FILMS, PAPERS, AND FABRICS**
TINTEN-/FARBSTOFFEMPFÄNGLICHE FOLIEN, PAPIERE UND STOFFE
PELLICULES, PAPIERS ET TISSUS RÉCEPTIFS AUX ENCRES/AUX COLORANTS

(30) Priority: 02.06.2010 US 350507 P
(43) Date of publication of application: 10.04.2013
(73) Proprietor: Lubrizol Advanced Materials, Inc., Cleveland, OH 44141-3247 (US)
(72) Inventor: Jack C. Scott, Jr., Lake Wylie South Carolina 29710 (US); ANDERLE, Gary, A., North Olmsted Ohio 44070 (US); PAFFORD, IV, Robert, J., North Royalton Ohio 44133 (US); POURAHMADY, Naser, Solon Ohio 44139 (US)
(74) Representative: Von Kreisler Selting Werner - Partnerschaft von Patentanwälten und Rechtsanwälten mbB
(86) International application number: PCT/US2011/038840
(87) International publication number: WO 2011/153296

(56) References cited:
- WO-A1-2009/082640
- DE-A1-102005 035 692
- GB-A- 1 100 386

## Description

### Field of the Invention

The present invention relates to an acrylate coating that imparts enhanced adhesion characteristics to polyolefin substrates, such as polypropylene and polyethylene. This acrylate polymer can also enhance ink or dye receptivity and enhance image quality when used as an ink/dye receptive coating on rolled goods that are not inherently ink/dye receptive.

### Background of the Invention

Rolled goods are used in a variety of applications such as signage, printed fabrics, and as print media. In most of these applications, it is important for the rolled goods to readily accept normal printing inks but to also be resistant to staining under all types of weather conditions, such as rain, snow, and ultraviolet light. Many different natural and synthetic polymers are currently used in rolled goods and have properties that meet the needs required in various applications to different extents. For instance, polypropylene normally exhibits exceptional water and chemical resistance. Polypropylene also offers the advantage of being recyclable which is a characteristic of growing commercial and environmental importance in many regions of the world. By virtue of their desirable array of physical characteristics, polypropylene rolled goods are widely available as films, woven and non-woven fabrics. However, unmodified polypropylene tends to have poor ink receptivity. This is because the polymers used in many coating formulations have poor adhesion to polypropylene films. Accordingly, polypropylene films are typically subjected to corona and/or plasma treatment to enhance their receptivity to inks.

United States Patent 5,700,867 discloses an aqueous polyurethane dispersion having an ionic functional group, polyoxyethylene units and hydrazine groups and its utilization in ink, coating and adhesive compositions. The polyoxyethylene units employed in these polymers can be in the main chain, at the end of the main chain or in side chains of the aqueous polyurethane. The content of polyoxyethylene units is about 20% by weight or less of the weight of the resin. Desirable properties of the composition are reported to include storage stability, water resistance, pigment dispersibility, and adhesion.

United States Patent 5,043,381 relates to an aqueous dispersion of nonionic water-dispersible polyurethane having pendant polyoxyethylene chains and one crosslink per 3,000 to 100,000 atomic weight units. United States Patent 4,992,507 relates to an aqueous dispersion of a nonionic, water-dispersible polyurethane having pendant polyoxyethylene chains and free acid or free tertiary amino groups. Diols and diisocyanates, having pendant polyoxyethylene chains, are mentioned generally in both of the latter two patents, such as those in United States Patent 3,905,929 and 3,920,598, respectively. The aqueous dispersions, revealed therein, are described as being useful as coating compositions.

United States Patent 4,983,662 relates to an aqueous self-crosslinkable coating composition comprising an aqueous dispersion of at least one polyurethane and having hydrazine (or hydrazone) functional groups and carbonyl functional groups disposed therein to provide a self-crosslinkable reaction, in which the polyurethane polymer takes part, via azomethine formation during and/or after film formation.

United States Patent 4,190,566 relates to non-ionic, water-dispersible polyurethanes having a substantially linear molecular structure and lateral polyalkylene oxide chains having about 3 to 30% by weight of lateral polyalkylene oxide polyether chains. The chains of these polymers consist of about 40-95% ethylene oxide units and 5-60% certain other alkylene oxide units selected from the group consisting of propylene oxide, butylene oxide and styrene oxide. Coatings are among the many applications for which these water-dispersible polyurethanes are described as being useful.

United States Patent 4,092,286 relates to water-dispersible polyurethane elastomers having a substantially linear molecular structure, characterized by (a) lateral polyalkylene oxide units of from about 0.5 to 10% by weight, based on the polyurethane as a whole and (b) a content of =N⁺=, -COO or -SO₃⁻ groups of from about 0.1 to 15 milliequivalents per 100g. These water-dispersible polyurethane elastomers are also described as being useful as coatings, among other things.

International Patent Publication No. WO 2009/082640 A1 describes a polymerization process to copolymerize hydrophobic ethylenically unsaturated olefins with polar monomers such as acrylates. This process utilizes an acid source to modify/catalyze the reactivity of the polar monomer and/or radically activated repeat units from the polar monomer to promote incorporation of the ethylenically unsaturated olefin. The copolymers made by this process are reported to show excellent adhesion to a variety of polymeric and/or polar substrates, such as polyolefins, acrylate coatings, wood, etc.

It would be desirable to develop a coating that is capable of improving the ink/dye receptivity of films, particularly polyolefin films, paper products, and fabrics. For instance, it would be beneficial to identify a waterborne acrylate polymer dispersion or formulation that could be used to coat films, paper products, non-woven fabrics, and woven fabrics to improve their printability and coloration by techniques well known in the art such as ink jet printing, rotary and flat screen printing, pad dyeing, knife-coating, spray coating, gravure methods and the like.

### Summary of the Invention

The present invention discloses films, papers, and fabrics (both woven and non-woven) that are more receptive to inks or dyes. The acrylic platform technology of this invention is generally more cost effective than competing aliphatic polyurethane polymers. These ink/dye receptive products are made by coating the surface of the film, paper, or fabric with certain acrylate polymers. These ink/dye receptive films, papers and fabrics have the ability to then be used in making laminated and coated products. In such products, the ink/dye receptive film, paper, or fabric is typically used as the outer layer of the article by virtue of its ability to accept ink or dye for labeling and/or ornamental decoration.

The subject invention more specifically discloses an ink/dye receptive film which is comprised of a base film which is coated with an acrylate polymer, wherein the base film is comprised of a polyolefin and from about 0.1 weight percent to about 20 weight percent of at least one filler, and wherein the acrylate polymer is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers (such as styrene, α-methylstyrene, and vinyl acetate).

The present invention further reveals a fabric having improved ink/dye receptivity and improved adhesion characteristics, which is comprised of a base fabric, wherein the base fabric is comprised filaments which are comprised of a polyolefin and from about 1 weight percent to about 20 weight percent of at least one filler, wherein the polyolefin fabric is coated with an acrylate polymer which is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

The subject invention further reveals a method of treating a base film to render it more receptive to ink or dye which comprised coating the base film with an acrylate polymer, wherein the base film includes from about 1 weight percent to about 20 weight percent of at least one filler, and wherein the acrylate polymer is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

The present invention also discloses a method of treating a fabric which is comprised of olefin fibers to render it more receptive to ink, which comprises coating the fabric with an acrylate polymer, wherein the olefin fibers in the fabric includes at least one filler in an amount of up to about 20 weight percent, and wherein the acrylate polymer is comprised of (a) 1 weight percent to 20 weight percent repeat units of at least one unsaturated aliphatic olefin monomer containing from 4 to 30 carbon atoms, (b) 50 weight percent to 98.5 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

### Detailed Description of the Invention

The acrylate polymers utilized in conjunction with this invention in coating the films, papers, and fabrics to make them more receptive to inks or dyes are comprised of (a) 1 weight percent to 20 weight percent repeat units of at least one unsaturated aliphatic olefin monomer containing from 4 to 30 carbon atoms, (b) 50 weight percent to 98.5 weight percent repeat units of at least one acrylate monomer, and (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl acetate. These acrylate polymers can also optionally contain up to about 2 weight percent of a crosslinking agent, such as difunctional acrylates, difunctional methacrylates, trifunctional acrylates, trifunctional methacrylates, 1,4-butanediol dimethacrylate, divinyl benzene, and the like. In cases where a crosslinking agent is utilized in the acrylate polymer it will typically be included at a level which is within the range of about 0.2 weight percent to about 0.4 weight percent.

The unsaturated aliphatic olefin monomer can be linear, branched or cyclic in structure and will contain from 4 to 30 carbon atoms. However, the olefin monomer utilized will not be a styrenic monomer wherein the aliphatic nature of the monomer is concluded after the first two carbon atoms of the ethylenically unsaturated monomer. The acrylate polymer is comprised of (a) repeat units of at least one unsaturated aliphatic olefin monomer containing from 4 to 30 carbon atoms and (b) repeat units of at least one ethylenically unsaturated monomer containing a carbonyl group or a nitrogen group. In one embodiment of the invention, the unsaturated aliphatic olefin monomer will be of the formula CH₂=CR¹R², wherein R¹ represents a linear or branched alkyl group containing from 1 to 28 carbon atoms which may be linear, branched, or cyclic, and wherein R² represents a hydrogen atom or a linear or branched alkyl group as set forth for R¹ with the proviso that R¹ and R² together have no more than 28 carbon atoms. The olefinic monomer will typically contain from 5 to 20 carbon atoms and will more typically contain from 5 to 12 carbon atoms. In many cases, the olefinic monomer will contain from about 6 to about 10 carbon atoms. In many cases, the olefinic monomer will be an α-olefin monomer, such as 1-butene, 1-pentene, 1-hexene, or 1-heptene. In other embodiments, it can be a mono, di, or tri-substituted terminal olefin such as isobutylene, 2-methyl-1-pentene, 2,4,4-trimethyl-1-pentene, or 2-methyl-1-hexene.

The acrylate monomer will be of the structural formula: 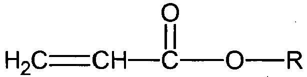 wherein R represents an alkyl group, which can be straight chained or branched and which can include a hetero atom such as nitrogen and oxygen, containing from about 1 to about 30 carbon atoms. In most cases, R will be an alkyl group, which can be straight chained or branched and which can include a hetero atom such as nitrogen and oxygen containing from 1 to 24 carbon atoms and more typically will contain from 1 to 10 carbon atoms. For instance, R can be a straight chained or branched alkyl group containing from 1 to 10 carbon atoms. Some representative examples of acrylate monomers that can be utilized include methyl acrylate, ethyl acrylate, n-propyl acrylate, isopropyl acrylate, n-butyl acrylate, tertiary-butyl acrylate, isobutyl acrylate, n-amyl acrylate, t-amyl acrylate, isoamyl acrylate, n-hexyl acrylate, 2-hydroxyethyl acrylate, 2-hydroxypropyl acrylate, 4- hydroxybutyl acrylate, N,N-dimethylaminoethyl acrylate, N,N- diethylaminoethyl acrylate, t-butylaminoethyl acrylate, glycidyl acrylate, benzyl acrylate, allyl acrylate, 2-n-butoxyethyl acrylate, 2-ethylbutyl acrylate, cinnamyl acrylate, crotyl acrylate, cyclohexyl acrylate, cyclopentyl acrylate, 2-ethoxyethyl acrylate, furfuryl acrylate, methallyl acrylate, 3- methoxybutyl acrylate, 2-methoxybutyl acrylate, n-octyl acrylate, 2-ethylhexyl acrylate, 2-phenylethyl acrylate, phenyl acrylate, propargyl acrylate, and mixtures thereof.

The additional ethylenically unsaturated monomers utilized are selected from methacrylate monomers, unsaturated carboxylic acids, unsaturated nitrile group containing monomers, and other vinyl group containing monomers (such as a vinyl aromatic monomer or vinyl acetate). The methacrylate monomers that can be utilized are of the structural formula: 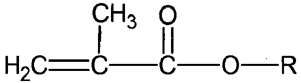 wherein R represents an alkyl group, which can be straight chained or branched and which can include a hetero atom such as nitrogen and oxygen group containing from about 1 to about 30 carbon atoms. In most cases, R will be an alkyl group, which can be straight chained or branched and which can include a hetero atom such as nitrogen and oxygen group containing from 1 to 24 carbon atoms and more typically will contain from 1 to 10 carbon atoms. For instance, R can be a straight chained or branched alkyl group containing from 1 to 10 carbon atoms. Some representative examples of methacrylate monomers that can be utilized include methyl methacrylate, ethyl methacrylate, n-propyl methacrylate, isopropyl methacrylate, n-butyl methacrylate, tertiary-butyl methacrylate, isobutyl methacrylate, n-amyl methacrylate, t-amyl methacrylate, isoamyl methacrylate, n-hexyl methacrylate, 2-hydroxyethyl methacrylate, 2-hydroxypropyl methacrylate, 4-hydroxybutyl methacrylate, N,N-dimethylaminoethyl methacrylate, N,N-diethylaminoethyl methacrylate, t-butylaminoethyl methacrylate, glycidyl methacrylate, benzyl methacrylate, allyl methacrylate, 2-n-butoxyethyl methacrylate, 2-ethylbutyl methacrylate, cinnamyl methacrylate, crotyl methacrylate, cyclohexyl methacrylate, cyclopentyl methacrylate, 2-ethoxyethyl methacrylate, furfuryl methacrylate, methallyl methacrylate, 3- methoxybutyl methacrylate, 2-methoxybutyl methacrylate, n-octyl methacrylate, 2-ethylhexyl methacrylate, 2-phenylethyl methacrylate, phenyl methacrylate, propargyl methacrylate, and mixtures thereof.

The vinyl monomers that can be used include vinyl acetate and vinyl aromatic monomers. Such vinyl aromatic monomers typically contain from 8 to 20 carbon atoms. Usually, the vinyl aromatic monomer will contain from 8 to 14 carbon atoms. Some representative examples of vinyl aromatic monomers that can be utilized include styrene, 2-methylstyrene, 3-methylstyrene, 4-methylstyrene, α-methyl styrene, 2,4-dimethylstyrene, 2,4-diisopropylstyrene, 4-tert-butylstyrene, 1-vinylnaphthalene, 2-vinylnaphthalene, 4-phenylstyrene, 3-methylstyrene and the like. Some representative examples of preferred vinyl aromatic monomers include styrene and α-methyl styrene. Vinyl acetate is also a preferred vinyl monomer that can be employed.

The unsaturated carboxylic acids that can be utilized include acrylic acid, fumaric acid, maleic acid, itaconic acid, crotonic acid, amino methyl propane sulfonic acid, sodium styrene sulfonic acid, and the like.

Some representative examples of crosslinking agents that can be used include divinyl benzene, 1,6-hexanediol diacrylate, propoxylated hexanediol diacrylate, dipropylene glycol diacrylate, trimethylolpropane triacrylate, ethoxylated trimethylolpropane triacrylate, butanediol diacrylate, ,6-hexanediol diacrylate, bisphenol A ethoxylate diacrylate, polyethylene glycol 200 diacrylate, tripropylene glycol diacrylate, neopentyl glycol propoxylate diacrylate, neopentyl glycol ethoxylate diacrylate, aliphatic ethoxylate diacrylate, aliphatic diacrylate, dipropylene glycol diacrylate, bisphenol A ethoxylate diacrylate, 1,6-hexanediol ethoxylate diacrylate, 1,6-hexanediol propoxylate diacrylate, trimethylolpropane propoxylate triacrylate, trimethylolpropane ethoxylate triacrylate, aliphatic diacrylate, ditrimethylolpropane tetraacrylate, dipentaerythritol pentaacrylate, tripropylene glycol diacrylate, glyceryl propoxylate triacrylate, ditrimethyolpropane pentaacrylate, aliphatic urethane triacrylate, aliphatic urethane diacrylate, aromatic urethane hexaacrylate, aromatic urethane diacrylate, monomethoxy trimethylolpropane ethoxylate diacrylate, tripropylene glycol diacrylate, and the like.

The acrylic polymers, utilized in the practice of this invention, will typically contain 1 weight percent to 20 weight percent repeat units that are derived from unsaturated aliphatic olefin monomers, 50 weight percent to 99 weight percent repeat units that are derived from acrylate monomers, and optionally, 0.2 weight percent to 30 weight percent repeat units that are derived from the additional ethylenically unsaturated monomers. The acrylic polymers utilized in the practice of this invention typically contain 5 weight percent to 18 weight percent of the unsaturated aliphatic olefin monomers, 55 weight percent to 95 weight percent acrylate monomers, and optionally, 0.4 weight percent to 25 weight percent of the additional ethylenically unsaturated monomers. The acrylic polymers utilized in the practice of this invention will more typically contain 10 weight percent to 15 weight percent of the unsaturated aliphatic olefin monomers, 75 weight percent to 90 weight percent acrylate monomers, and optionally, 0.7 weight percent to 10 weight percent of the additional ethylenically unsaturated monomers.

A more detailed description of various types of acrylate polymers that can be utilized in the practice of this invention is provided by International Patent Publication No. WO 2009/082640 A1. The teachings of International Patent Publication No. WO 2009/082640 A1 are incorporated herein by reference for the purpose of describing the types of acrylate polymers that can be used and techniques for their synthesis. Polymerization can be initiated after all of the unsaturated aliphatic olefin monomer, the acrylate monomer and any additional ethylenically unsaturated monomers have been fed into the polymerization reactor. In the alternative, some of the monomers can be continuously or semi-continuously fed into the polymerization reactor after the polymerization has been initiated. The monomers can be fed directly into the polymerization reactor as separate feeds or can be introduced into the reactor as mixed monomer streams. In one embodiment of this invention, one or more of the monomers, such as the unsaturated aliphatic olefin monomer, can be pulsed into the reactor after initial particle formation or a positive sign of reaction. The pulse fed is typically started at least about 1 minute and more typically at least about 5 minutes after polymerization has been initiated. For instance, the unsaturated aliphatic olefin monomer can be pulsed into the polymerization reactor over a period from 45 minutes to 90 minutes after polymerization has been initiated.

The films that can be treated in accordance with this invention to make them more receptive to inks and dyes contain from about 0.1 weight percent to about 50 weight percent of a filler (based upon the total weight of the film). The films of this invention typically contain from about 0.1 weight percent to about 20 weight percent of a filler. Such films can be thick or thin, rigid or flexible. An example of a thick, rigid film is polypropylene fluted board stock. Rolled goods are an example of thin, flexible films which can be treated in accordance with this invention. Fillers will not be utilized at levels of greater than 20 weight percent because higher amounts lead to compromised physical properties, such as reduced tensile strength. The filler will typically be present in the film at a level which is within the range of 0.25 weight percent to 18 weight percent. The filler will more typically be present at a level which is within the range of 0.5 weight percent to 15 weight percent. The filler will preferably be present at a level which is within the range of 1 weight percent to 12 weight percent. The filler will more preferably be present at a level which is within the range of 2 weight percent to 10 weight percent. The filler can be selected from diatomaceous earth, clay, talc, titanium dioxide, calcium carbonate, silica, and the like.

The acrylic polymer can be applied to the film, paper or fabric by dipping, brushing, flow coating, spraying, screen printing, gravure printing, rolling, or any other suitable means. In any case, the acrylic polymer coating makes the substrate treated more receptive to ink and dyes. For purposes of this invention, good ink or dye receptivity relates to the formation of a fast drying, high contrast, low smudging, and good resolution image on the substrate with minimal amounts of ink rather than large amounts of ink. Good ink receptivity is especially important in ink jet printing because the formulated ink in the piezo-electric application device is one of the more costly items in the entire printing process. Another printing cost is damaged and non-useable printed articles (substrates) that have become smudged or otherwise damaged because the inked image was modified before the ink fully dried or before the ink was fully adsorbed in the substrate. The acrylic polymer coatings of this invention are beneficial in both of these regards.

The technique of this invention can be used to improve the ink or dye receptivity of a variety of substrates to make them more easily printable. Substrates include woven and non-woven fabrics based on polyolefin rather than cellulose, acrylic, polyester and other fibers commonly used in the industry. The ink/dye receptive coating may also be applied to polymeric films that do not have fibrous reinforcement, e.g., plasticized poly(vinyl chloride), polyethylene films, polypropylene films, etc. It is particularly beneficial when utilized to treat filler modified polyolefin homopolymer/copolymer films. It is also beneficial when coated on fabrics which are blends of a polyolefin fiber with other fibrous materials such as cotton, wool, polyester, nylon, rayon, jute or other natural fibers. As these coatings are ink/dye receptive, they can be used as labels, tags, etc., on articles and garments identifying size, use recommendations, cleaning recommendations, safety warnings, source, displaying trademarks or trade dress, etc. If desired, one would apply the ink/dye receptive coating with or without other layers as an attachable printable surface to a woven, non-woven, or other film. If one desires, the ink/dye receptive coating can be added to another object like a banner, poster, signage, billboard, etc., as new printed matter to update another object with new, correct, or different information. In another important embodiment of this invention, pad dyeing techniques can be employed to provide color to woven and non-woven polyolefin fabrics that have been treated with the acrylate polymer. For instance, disposable protective wear can be treated to implement durable, abrasion resistant bright colors such as yellow or blue, to the garment. Polyolefin outdoor fabrics, such as awnings, tents, umbrellas, sunshades and boat covers can also be treated to obtain durable coloration by pad dyeing, rotary printing and other methods known in the art. The ink/dye receptive substrate can be adhered to other objects via various adhesives, melt bonding, stitching, etc. Examples of suitable textiles include cellulose; cellulose acetate; acrylics; wool; cotton; jute; linen; polyesters; polyamides; polyolefins, e.g., polypropylene; regenerated cellulose (Rayon); paper and label stock; and the like.

The dry ink/dye receptive coating may be applied at a level within the range of 5 g/m² to 50 g/m². It is typically applied at a level of 10 g/m² to 40 g/m² and is preferably applied at a level of 15 g/m² to 30 g/m². The ink/dye receptive coating can be pigmented, dye-containing, or clear. It can be any color, although light colors (white, off-white, beige, etc.) are generally desirable for enhanced contrast with subsequent ink printing (such as inkjet). The final article can include a variety of intermediate layers and/or subsequently applied surface layers (a common procedure with photographs) as long as the ink/dye receptive layer is available to accept the ink or dye.

Optional additives to ink/dye receptive coatings would include an additive to stabilize or bind the pigment or dye of the ink near its initial contact point. The ionic species can be metal salts, such as alum, calcium chloride, aluminum chloride, zinc salts and the like. The ionic group can come from molecules or polymers that have amide, carboxylic acid, carboxylate, amine groups available. The polymers include cationically modified natural gums or starches. The polymers include those from acrylic, acrylamide, and/or epichlorohydrin monomers. These polymers and their manufacturing uses are well known to those skilled in the art. Such ionic species are typically present at concentrations of 0.5 to 10 weight percent based on the weight of the dry ink/dye receptive coating and are more typically present at a level of 1 to 5 weight percent. Similar polymers, known as rheology modifiers, may also be present to aid in the application of the ink/dye receptive coating to a substrate. Rheology modifiers may be present at concentrations from above 0.1 part by weight and above based on 100 parts of acrylate polymer. Often less than 1 part of rheology modifier is necessary.

Other polymers may be blended with the acrylate polymer. These polymers include one or more acrylate polymers or copolymers, vinyl acetate polymers or copolymers, polyurethane dispersions, and/or vinyl chloride polymer or copolymer. These polymers may optionally be present from about 10 parts by weight to about 400 parts by weight per every 100 parts by weight of acrylate polymer of this invention. Various fillers may be added to add opacity, volume, change ink interaction, etc. These include talc, calcium carbonate, TiO₂, and precipitated silica. These are optionally present at a level within the range of 3 to 300 parts by weight per 100 parts by weight of the total polymers.

The ink/dye receptive coating is particularly desirable where multicolor images or photographs are to be printed on the coating. Thus, in one embodiment, it is desirable that at least three different pigments and/or dyes be present in the printed image. As ink/dye receptive coatings would be desirable on a variety of banners, signage, and related advertising and promotional activity, it is desirable that the coating and substrate be printable on ink jet printers of the water-borne ink and/or solvent borne ink types. Other additives well known to those skilled in the art can be used to aid in preparation of the dispersions of this invention. Such additives include surfactants, stabilizers, defoamers, antimicrobial agents, antioxidants, UV absorbers, carbodiimides, and the like. The dispersions used in the practice of this invention typically have total solids of at least about 20 weight percent, preferably at least about 25 weight percent and more preferably at least about 30 weight percent. The waterborne acrylate polymer dispersions of the present invention can be processed by methods well known to those skilled in the art (including blending with other polymers and materials) to make coating compositions. Additives such as activators, curing agents, stabilizers, such as Stabaxol™ P200, colorants, pigments, neutralizing agents, thickeners, defoamers, nonreactive and reactive plasticizers, coalescing agents such as di(propylene glycol) methyl ether (DPM), waxes, slip and release agents, antimicrobial agents, surfactants such as Pluronic™ F68-LF and IGEPALT™ CO630 and silicone surfactants, metals, antioxidants, UV stabilizers, antiozonants, and the like, can optionally be added as appropriate before and/or during the processing of the dispersions of this invention into finished products as is well known to those skilled in the art.

Suitable opacifiers include glycol fatty acid esters; alkoxylated fatty acid esters; fatty acid alcohols; hydrogenated fatty acids, waxes and oils; kaolin and other clays; magnesium silicate; calcium carbonates; titanium dioxide; silica; and the like, and mixtures thereof. Such suitable opacifiers typically comprise about 0.1 weight percent to about 70 weight percent, preferably about 0.5 weight percent to about 66 weight percent, and more preferably about 1 weight percent to about 50 weight percent of the total weight of the coating compositions of the present invention. In some aspects, when used in higher amounts, these opacifiers also function as fillers.

Suitable surfactants include a wide variety of nonionic, cationic, anionic, and zwitterionic surfactants, such as those disclosed in McCutcheon's Detergents and Emulsifiers, North American Edition (1986), Allured Publishing Corporation; and in United States Patent 3,755,560, United States Patent 4,421,769, United States Patent 4,704,272, United States Patent 4,741,855, United States Patent 4,788,006, and United States Patent 5,011,681. Such suitable surfactants typically comprise about 0.1 weight percent to about 25 weight percent, preferably about 0.5 weight percent to about 25 weight percent, and more preferably about 1 weight percent to about 15 weight percent of the total weight of the polymerization ingredients and/or coating composition.

This invention is illustrated by the following examples that are merely for the purpose of illustration and are not to be regarded as limiting the scope of the invention or the manner in which it can be practiced. Unless specifically indicated otherwise, parts and percentages are given by weight.

### Examples 1-9

In this series of experiments, various films were coated with the acrylic polymers of this invention and compared to films that were coated with conventional acrylic coatings and filled polyester/polyurethane coatings. The acrylic polymer evaluated was synthesized by the free radical polymerization of a monomeric mixture containing about 86.5 weight percent ethyl acrylate, about 12.5 weight percent 2,4,4-trimethyl-pentene (TMP-1), and about 1 weight percent methacrylic acid under emulsion polymerization conditions. The acrylic polymer made by this process was determined to contain about 88 weight percent bound ethyl acrylate, about 11 weight percent bound TMP-1, and about 1 weight percent bound methacrylic acid. The emulsion polymer produced had a solids content of about 40% to 45%.

A coating composition was made by dispersing about 80 parts of calcium carbonate (CaCO₃) throughout the above-described latex of acrylic polymer (Experimental Polymer). It was applied to the surface of various substrates and was dried thereon in an oven at a temperature of about 220°F. The substrates identified in Table 1 were also coated with a conventional acrylic polymer ink receptive coating and a filled polyester/polyurethane polymer composition ink receptive coating which also contained about 80 parts of calcium carbonate. The coated substrates were then evaluated to determine the level of adhesion of the coating to the substrate by ASTM D3359 and to characterize the printability of the coated substrates. These characteristics of the coated substrates are reported in Table 1. Adhesion and print quality were rated on a 1 to 5 scale with 1 being poor and 5 being best.

**Table 1**

| | Experimental Polymer | | Polyester/Polyurethane | | Conventional Acrylic | |
|---|---|---|---|---|---|---|
| Substrate | Adhesion | Print Qual. | Adhesion | Print Qual. | Adhesion | Print Qual. |
| 1- Woven PP¹ | 4.0 | 4.0 | 2.5 | 4.0 | 1.5 | 3.0 |
| 2- Woven PP² | 4.0 | 4.0 | 2.5 | 4.0 | 1.5 | 3.0 |
| 3- Woven PP³ | 4.0 | 3.0 | 4.0 | 3.0 | 2.5 | 2.0 |
| 4 - PP Film⁴ | 2.0 | 4.0 | 1.5 | 4.0 | 0.5 | 3.0 |
| 5 - PP Film⁵ | 2.5 | 4.0 | 1.5 | 4.0 | 0.5 | 3.0 |
| 6 - PP Film⁶ | 2.5 | 4.0 | 1.5 | 3.5 | 0.5 | 2.5 |
| 7 - PP Fabric⁷ | 4.0 | 4.0 | 4.0 | 4.5 | 4.0 | 4.0 |
| 8 - Non-Woven PP⁸ | 2.0 | 4.0 | 2.0 | 4.0 | 2.0 | 4.5 |
| 9 - Non- Woven PP⁹ | 2.0 | 4.0 | 2.0 | 4.0 | 2.0 | 4.5 |

| | | | | | | |
|---|---|---|---|---|---|---|
| 1 - Propex® woven slit polypropylene film having an ash content of about 18.9% on its surface. 2 - Propex® woven slit polypropylene film having an ash content of about 18.9% on its surface (Corona treated). 3 - Propex® woven slit polypropylene film having an ash content of about 18.9% on its surface (coatings crosslinked with Xama-7® polyfunctional aziridine). 4 - Toray unfilled polypropylene film having an ash content of 0%. 5 - Toray unfilled polypropylene film having an ash content of 0% (Corona treated). 6 - Toray unfilled polypropylene film having an ash content of 0% (coatings crosslinked with Xama-7® polyfunctional aziridine). 7 - Concordia woven polypropylene fabric having a bulk ash content of about 1.8%. 8 - Polypropylene film modified with diatomaceous earth having an unknown ash content. 9 - Polypropylene film modified with diatomaceous earth having an unknown ash content (coatings crosslinked with Xama-7® polyfunctional aziridine). | | | | | | |

As can be seen by reviewing Table 1, the Experimental Acrylate Polymer utilized in accordance with this invention exhibited either superior or equivalent adhesion characteristics as compared to the coatings made with the controls. With respect to print quality, the Experimental Acrylate Polymer utilized in accordance with this invention generally exhibited equivalent performance characteristics to the much more expensive polyurethane based ink receptive coating. In terms of print quality, the coated substrates of this invention with typically superior, but is some cases roughly equivalent in performance, to the conventional acrylic type ink receptive coatings. In any case, this series of experiments shows that the coated substrates of this invention exhibit a highly desirable combination of both adhesion characteristics and printability.

### Examples 10-16

In this series of experiments, various polymers including the experimental acrylate polymer utilized in conjunction with this invention and a number of conventional polymers were evaluated for adhesion and ink receptivity to a filled polypropylene fluted board stock from AGFA, commonly used in signage. This filled polypropylene fluted board stock was determined to have an ash content of 9.5%. The test polymers were rod coated onto the fluted board stock and dried at ambient temperature (about 20°C). A polyester textile was then bonded to this coated polypropylene board stock using an epoxy adhesive. Bond strength was then evaluated by measuring the energy required to separate these two substrates. These results are summarized in Table 2.

**Table 2**

| | Polypropylene Fluted Board | | | | |
|---|---|---|---|---|---|
| Polymer | Maximum Load (N) | | | | Average |
| 10 - Experimental | 13.6 | 17.6 | 18.3 | 15.9 | 16.3 |
| 11 - Sancure 20041¹⁰ | 15.6 | 17.9 | 18.6 | 18.9 | 17.7 |
| 12 - Sancure 20025F¹⁰ | 14.2 | 17.2 | 18.5 | 20.1 | 17.5 |
| 13 - Sancure 899¹¹ | 1.6 | 6.3 | 5.5 | 6.4 | 4.9 |
| 14 - Vycar 577E¹² | 6.1 | 3.2 | 5.2 | 5.0 | 4.9 |
| 15 - Hycar 26349 Acrylic¹³ | 3.0 | 3.8 | 2.2 | 2.3 | 2.8 |
| 16 - Hycar 26-1199 Acrylic¹³ | 14.4 | 11.8 | 13.9 | - | 13.4 |

| | | | | | |
|---|---|---|---|---|---|
| 10 - Waterborne NMP-free aliphatic polyester polyurethane dispersion from Lubrizol Corporation 11 - Waterborne NMP containing aliphatic polyester polyurethane dispersion from Lubrizol Corporation 12 - Waterborne plasticized polyvinyl chloride-acrylate copolymer emulsion from Lubrizol Corporation 13 - Acrylic polymer emulsion from Lubrizol Corporation | | | | | |

As can be seen by reviewing Table 2, the experimental acrylic polymer utilized in accordance with this invention showed results similar to urethane but was significantly better than the conventional acrylic polymers tested. Accordingly, the technology of this invention can be utilized to replace urethane based polymers to attain a significant reduction in cost.

### Examples 17-19

Polypropylene fabrics are commonly used for upholstery applications. As less expensive substrates have come into use for the purpose of cost savings, mechanical needling as well as backcoating to achieve acceptable seam slippage or dimensional stability is now commonly utilized. Because of the three dimensional nature of these substrates, adhesion is not usually an issue, and filled acrylic-based compounds are commonly employed. However, a polymer with greater strength and adhesion could eliminate or reduce the need for the needling process resulting in significant further cost savings.

In this experiment, a conventional acrylic self crosslinking upholstery backcoating was applied to a standard substrate and compared to un-needled backcoated with the acrylic polymer utilized in accordance with this invention. Seam slippage was then measured and is reported in Table 3.

**Table 3**

| Example | Experimental | | | Control* | | |
|---|---|---|---|---|---|---|
| | Add-on oz/yd² (g/m²) | Warp SS lb/f (N/cm) | Fill SS lb/f (N/cm) | Add-on oz/yd² (g/m²) | Warp SS lb/f (N/cm) | Fill SS lb/f (N/cm) |
| 17 | 1.68 (56.8) | 21.13 (3.08) | | 1.64 (55.4) | 18.60 (2.71) | |
| | 1.65 (55.8) | | 27.41 (4.00) | 1.73 (58.5) | | 24.94 (3.64) |
| 18 | 1.68 (56.8) | 20.53 (3.00) | | 1.67 (56.4) | 19.13 (2.79) | |
| | 1.73 (58.5) | | 26.44 (3.86) | 1.82 (61.5) | | 22.45 (3.28) |
| 19 | 1.32 (44.6) | 20.57 (3.00) | | 1.73 (58.5) | 16.75 (2.44) | |
| | 1.89 (63.9) | | 26.44 (3.86) | 1.55 (52.4) | | 18.51 (2.70) |
| Average ** | | 20.7 (3.02) | 26.8 (3.91) | | 18.2 (2.66) | 21.9 (3.20) |

| | | | | | | |
|---|---|---|---|---|---|---|
| * Acrylic self-crosslinking upholstery back coating * Average of Examples 17, 18, and 19 | | | | | | |

As can be seen from Table 3, the acrylic polymeric composition of this invention resulted in about 10 to 20% better warp and fill seam slippage levels. Accordingly, utilizing the technique of this invention, cost savings are attainable by either eliminating or reducing needling requirements and/or by reducing the amount of backcoating applied to a needled fabric. Taking such steps can be accomplished without comprising strength as exhibited by warp and fill seam strength.

### Examples 20-44

Acrylate polymers which are suitable for use in the practice of this invention can be synthesized by polymerizing the monomer mixture described in Examples 1-9 over a period of **M** hours wherein the TMP-1 monomer can be pulsed into the polymerization reactor over a **P** minute period commencing about **D** minutes after polymerization is initiated.

| EX | Monomer Mix Feed Time **(M)** | Olefin Feed Time **(P)** | Olefin Delay Time **(D)** |
|---|---|---|---|
| | hours | minutes | minutes |
| 20 | 3 | 30 | 15 |
| 21 | 3 | 30 | 30 |
| 22 | 3 | 30 | 45 |
| 23 | 3 | 30 | 60 |
| 24 | 3 | 45 | 15 |
| 25 | 3 | 45 | 30 |
| 26 | 3 | 45 | 45 |
| 27 | 3 | 60 | 15 |
| 28 | 3 | 60 | 30 |
| 29 | 3 | 75 | 15 |
| 30 | 4 | 45 | 15 |
| 31 | 4 | 45 | 30 |
| 32 | 4 | 45 | 45 |
| 33 | 4 | 45 | 60 |
| 34 | 4 | 45 | 75 |
| 35 | 4 | 60 | 15 |
| 36 | 4 | 60 | 30 |
| 37 | 4 | 60 | 45 |
| 38 | 4 | 60 | 60 |
| 39 | 4 | 75 | 15 |
| 40 | 4 | 75 | 30 |
| 41 | 4 | 75 | 45 |
| 42 | 4 | 90 | 15 |
| 43 | 4 | 90 | 30 |
| 44 | 4 | 105 | 15 |

Of examples 20-44 above, examples 20, 24, 29, 30, 35, 39, 42, and 44 have been synthesized prior to May 26^{th}, 2011, while the other examples in that series are prophetic.

While certain representative embodiments and details have been shown for the purpose of illustrating the subject invention, it will be apparent to those skilled in this art that various changes and modifications can be made therein without departing from the scope of the subject invention.

## Claims

1. An ink/dye receptive film comprising a base film comprised of a polyolefin and from 0.1 weight percent to 50 weight percent of at least one filler which base film is coated with an acrylate polymer, wherein the acrylate polymer is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

2. The ink/dye receptive film as specified in claim 1, wherein the filler is present at a level which is within the range of 0.25 to 20 weight percent, and wherein the filler is selected from the group consisting of diatomaceous earth, titanium dioxide, calcium carbonate, talc, clay, and silica.

3. The ink/dye receptive film as specified in claim 2, wherein the acrylic polymer contains 5 weight percent to 20 weight percent of the unsaturated aliphatic olefin monomers, 55 weight percent to 95 weight percent the acrylate monomers, and 0.4 weight percent to 25 weight percent of the additional ethylenically unsaturated monomers, or wherein the acrylic polymer contains 10 weight percent to 15 weight percent of the unsaturated aliphatic olefin monomers, 75 weight percent to 90 weight percent the acrylate monomers, and 0.7 weight percent to 10 weight percent of the additional ethylenically unsaturated monomers.

4. The ink/dye receptive film as specified in claim 1, wherein the acrylic polymer contains up to 2 weight percent of a crosslinking agent.

5. The ink/dye receptive film as specified in claim 2, wherein the unsaturated aliphatic olefin monomer is 2,4,4-trimethyl-1-pentene

6. The ink/dye receptive film as specified in claim 4, wherein the crosslinking agent is selected from the group consisting of divinyl benzene, 1,6-hexanediol diacrylate, propoxylated hexanediol diacrylate, dipropylene glycol diacrylate, trimethylolpropane triacrylate, ethoxylated trimethylolpropane triacrylate, butanediol diacrylate, 6-hexanediol diacrylate, bisphenol A ethoxylate diacrylate, polyethylene glycol 200 diacrylate, tripropylene glycol diacrylate, neopentyl glycol propoxylate diacrylate, neopentyl glycol ethoxylate diacrylate, aliphatic ethoxylate diacrylate, aliphatic diacrylate, dipropylene glycol diacrylate, bisphenol A ethoxylate diacrylate, 1,6-hexanediol ethoxylate diacrylate, 1,6-hexanediol propoxylate diacrylate, trimethylolpropane propoxylate triacrylate, trimethylolpropane ethoxylate triacrylate, aliphatic diacrylate, ditrimethylolpropane tetraacrylate, dipentaerythritol pentaacrylate, tripropylene glycol diacrylate, glyceryl propoxylate triacrylate, ditrimethyolpropane pentaacrylate, aliphatic urethane triacrylate, aliphatic urethane diacrylate, aromatic urethane hexaacrylate, aromatic urethane diacrylate, monomethoxy trimethylolpropane ethoxylate diacrylate, and tripropylene glycol diacrylate.

7. The ink/dye receptive film as specified in claim 5, wherein the acrylate monomer is ethyl acrylate.

8. The ink/dye receptive film as specified in claim 7, wherein the additional ethylenically unsaturated monomer is methacrylic acid.

9. An ink/dye receptive fabric comprising a base fabric comprised of filaments which are comprised of a polyolefin and from 0.1 weight percent to 50 weight percent of at least one filler which base fabric is coated with an acrylate polymer, wherein the acrylate polymer is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

10. The fabric as specified in claim 9, wherein the acrylic polymer contains 5 weight percent to 20 weight percent of the unsaturated aliphatic olefin monomers, 55 weight percent to 95 weight percent the acrylate monomers, and 0.4 weight percent to 25 weight percent of the additional ethylenically unsaturated monomers.

11. The fabric as specified in claim 10, wherein the unsaturated aliphatic olefin monomer is 2,4,4-trimethyl-1-pentene, wherein the acrylate monomer is ethyl acrylate, and wherein the additional ethylenically unsaturated monomer is methacrylic acid.

12. The ink/dye receptive fabric as specified in claim 11, wherein the base fabric is a woven fabric, or wherein the base fabric is a non-woven fabric.

13. The ink/dye receptive fabric as specified in claim 11, wherein the filler is present in the base fabric at a level which is within the range of 0.25 to 12 weight percent, and wherein the filler is selected from the group consisting of diatomaceous earth, titanium dioxide, calcium carbonate, talc, clay, and silica.

14. A method of treating an ink/dye receptive film or ink/dye receptive fabric to render it more receptive to ink or dye, wherein said ink/dye receptive film and ink/dye receptive fabric is comprised of a base film or base fabric comprised of polyolefin and from 0.1 weight percent to 50 weight percent of at least one filler, wherein the method comprises coating base film or base fabric with an acrylate polymer, wherein the acrylate polymer is comprised of (a) 1 weight percent to 20 weight percent repeat units of at least one unsaturated aliphatic olefin monomer containing from 4 to 30 carbon atoms, (b) 50 weight percent to 99 weight percent repeat units of at least one acrylate monomer, and optionally, (c) 0.2 weight percent to 30 weight percent repeat units of at least one additional ethylenically unsaturated monomer selected from the group consisting of unsaturated carboxylic acids, methacrylate monomers, unsaturated nitrile group containing monomers, and vinyl monomers.

## Patentansprüche

1. Tinten-/farbstoffaufnehmende Folie, umfassend eine Basisfolie, die aus einem Polyolefin und 0,1 Gew.-% bis 50 Gew.-% wenigstens eines Füllstoffs besteht, wobei die Basisfolie mit einem Acrylatpolymer beschichtet ist, wobei das Acrylatpolymer aus Folgendem besteht: (a) 1 Gew.-% bis 20 Gew.-% Repetiereinheiten von wenigstens einem ungesättigten aliphatischen Olefinmonomer, das 4 bis 30 Kohlenstoffatome enthält, (b) 50 Gew.-% bis 99 Gew.-% Repetiereinheiten von wenigstens einem Acrylatmonomer und gegebenenfalls (c) 0,2 Gew.-% bis 30 Gew.-% Repetiereinheiten von wenigstens einem zusätzlichen ethylenisch ungesättigten Monomer, das aus der Gruppe ausgewählt ist, die aus ungesättigten Carbonsäuren, Methacrylat-Monomeren, ungesättigten nitrilgruppenhaltigen Monomeren und Vinylmonomeren besteht.

2. Tinten-/farbstoffaufnehmende Folie gemäß Anspruch 1, wobei der Füllstoff in einem Anteil im Bereich von 0,25 bis 20 Gew.-% vorhanden ist und wobei der Füllstoff aus der Gruppe ausgewählt ist, die aus Diatomeenerde, Titandioxid, Calciumcarbonat, Talk, Ton und Siliciumoxid besteht.

3. Tinten-/farbstoffaufnehmende Folie gemäß Anspruch 2, wobei das Acrylpolymer 5 Gew.-% bis 20 Gew.-% der ungesättigten aliphatischen Olefinmonomere, 55 Gew.-% bis 95 Gew.-% der Acrylatmonomere und 0,4 Gew.-% bis 25 Gew.-% der zusätzlichen ethylenisch ungesättigten Monomere enthält oder wobei das Acrylpolymer 10 Gew.-% bis 15 Gew.-% der ungesättigten aliphatischen Olefinmonomere, 75 Gew.-% bis 90 Gew.-% der Acrylatmonomere und 0,7 Gew.-% bis 10 Gew.-% der zusätzlichen ethylenisch ungesättigten Monomere enthält.

4. Tinten-/farbstoffaufnehmende Folie gemäß Anspruch 1, wobei das Acrylpolymer bis zu 2 Gew.-% eines Vernetzungsmittels enthält.

5. Tinten-/farbstoffaufnehmende Folie gemäß Anspruch 2, wobei es sich bei dem ungesättigten aliphatischen Olefinmonomer um 2,4,4-Trimethyl-1-penten handelt.

6. Tinten-/farbstoffaufnehmende Folie gemäß Anspruch 4, wobei das Vernetzungsmittel aus der Gruppe ausgewählt ist, die aus Divinylbenzol, 1,6-Hexandioldiacrylat, propoxyliertem Hexandioldiacrylat, Dipropylenglycoldiacrylat, Trimethylolpropantriacrylat, ethoxyliertem Trimethylolpropantriacrylat, Butandioldiacrylat, 6-Hexandioldiacrylat, Bisphenol-A-ethoxylatdiacrylat, Polyethylenglycol-200-diacrylat, Tripropylenglycoldiacrylat, Neopentylglycolpropoxylatdiacrylat, Neopentylglycolethoxylatdi-acrylat, aliphatischem Ethoxylatdiacrylat, aliphatischem Diacrylat, Dipropylenglycoldiacrylat, Bisphenol-A-ethoxylatdiacrylat, 1,6-Hexandiol-ethoxylatdiacrylat, 1,6-Hexandiolpropoxylatdiacrylat, Trimethylolpropan-propoxylattriacrylat, Trimethylolpropanethoxylattriacrylat, aliphatischem Diacrylat, Ditrimethylolpropantetraacrylat, Dipentaerythritpentaacrylat, Tripropylenglycoldiacrylat, Glycerylpropoxylattriacrylat, Ditrimethyolpro-panpentaacrylat, aliphatischem Urethantriacrylat, aliphatischem Urethandiacrylat, aromatischem Urethanhexaacrylat, aromatischem Urethandiacrylat, Monomethoxytrimethylolpropanethoxylatdiacrylat und Tripropylenglycoldiacrylat besteht.

7. Tinten-/farbstoffaufnehmende Folie gemäß Anspruch 5, wobei es sich bei dem Acrylatmonomer um Ethylacrylat handelt.

8. Tinten-/farbstoffaufnehmende Folie gemäß Anspruch 7, wobei es sich bei dem zusätzlichen ethylenisch ungesättigten Monomer um Methacrylsäure handelt.

9. Tinten-/farbstoffaufnehmendes Textil, umfassend ein Basistextil, das aus Filamenten besteht, die aus einem Polyolefin und 0,1 Gew.-% bis 50 Gew.-% wenigstens eines Füllstoffs bestehen, wobei das Basistextil mit einem Acrylatpolymer beschichtet ist, wobei das Acrylatpolymer aus Folgendem besteht: (a) 1 Gew.-% bis 20 Gew.-% Repetiereinheiten von wenigstens einem ungesättigten aliphatischen Olefinmonomer, das 4 bis 30 Kohlenstoffatome enthält, (b) 50 Gew.-% bis 99 Gew.-% Repetiereinheiten von wenigstens einem Acrylatmonomer und gegebenenfalls (c) 0,2 Gew.-% bis 30 Ges.-% Repetiereinheiten von wenigstens einem zusätzlichen ethylenisch ungesättigten Monomer, das aus der Gruppe ausgewählt ist, die aus ungesättigten Carbonsäuren, Methacrylat-Monomeren, ungesättigten nitrilgruppenhaltigen Monomeren und Vinylmonomeren besteht.

10. Textil gemäß Anspruch 9, wobei das Acrylpolymer 5 Gew.-% bis 20 Gew.-% der ungesättigten aliphatischen Olefinmonomere, 55 Gew.-% bis 95 Gew.-% der Acrylatmonomere und 0,4 Gew.-% bis 25 Gew.-% der zusätzlichen ethylenisch ungesättigten Monomere enthält.

11. Textil gemäß Anspruch 10, wobei es sich bei dem ungesättigten aliphatischen Olefinmonomer um 2,4,4-Trimethyl-1-penten, bei dem Acrylatmonomer um Ethylacrylat und bei dem zusätzlichen ethylenisch ungesättigten Monomer um Methacrylsäure handelt.

12. Tinten-/farbstoffaufnehmendes Textil gemäß Anspruch 11, wobei das Basistextil ein Gewebe ist oder wobei das Basistextil ein Vliesstoff ist.

13. Tinten-/farbstoffaufnehmendes Textil gemäß Anspruch 11, wobei der Füllstoff in dem Basistextil in einem Anteil im Bereich von 0,25 bis 12 Gew.-% vorhanden ist und wobei der Füllstoff aus der Gruppe ausgewählt ist, die aus Diatomeenerde, Titandioxid, Calciumcarbonat, Talk, Ton und Siliciumoxid besteht.

14. Verfahren zur Behandlung einer tinten-/farbstoffaufnehmenden Folie oder eines tinten-/farbstoffaufnehmenden Textils, um sie/es besser aufnahmefähig für Tinte oder Farbstoff zu machen, wobei die tinten-/farbstoffaufnehmende Folie oder das tinten-/farbstoffaufnehmende Textil aus einer Basisfolie oder einem Basistextil besteht, die/das aus einem Polyolefin und 0,1 Gew.-% bis 50 Gew.-% wenigstens eines Füllstoffs besteht, wobei das Verfahren das Beschichten der Basisfolie oder des Basistextils mit einem Acrylatpolymer umfasst, wobei das Acrylatpolymer aus Folgendem besteht: (a) 1 Gew.-% bis 20 Gew.-% Repetiereinheiten von wenigstens einem ungesättigten aliphatischen Olefinmonomer, das 4 bis 30 Kohlenstoffatome enthält, (b) 50 Gew.-% bis 99 Gew.-% Repetiereinheiten von wenigstens einem Acrylatmonomer und gegebenenfalls (c) 0,2 Gew.-% bis 30 Gew.-% Repetiereinheiten von wenigstens einem zusätzlichen ethylenisch ungesättigten Monomer, das aus der Gruppe ausgewählt ist, die aus ungesättigten Carbonsäuren, Methacrylat-Monomeren, ungesättigten nitrilgruppenhaltigen Monomeren und Vinylmonomeren besteht.

## Revendications

1. Film réceptif aux encres/aux colorants comprenant un film de base composé d'une polyoléfine et de 0,1 pour cent en poids à 50 pour cent en poids d'au moins une charge, lequel film de base est revêtu d'un polymère d'acrylate, dans lequel le polymère d'acrylate est composé de (a) 1 pour cent en poids à 20 pour cent en poids de motifs répétitifs d'au moins un monomère d'oléfine aliphatique insaturée contenant de 4 à 30 atomes de carbone, (b) 50 pour cent en poids à 99 pour cent en poids de motifs répétitifs d'au moins un monomère d'acrylate et, facultativement, (c) 0,2 pour cent en poids à 30 pour cent en poids de motifs répétitifs d'au moins un monomère éthyléniquement insaturé supplémentaire choisi dans le groupe constitué des acides carboxyliques insaturés, des monomères de méthacrylate, des monomères contenant un groupe nitrile insaturé et des monomères vinyliques.

2. Film réceptif aux encres/aux colorants selon la revendication 1, dans lequel la charge est présente à un taux qui est dans la plage de 0,25 à 20 pour cent en poids, et dans lequel la charge est choisie dans le groupe constitué de la terre de diatomée, du dioxyde de titane, du carbonate de calcium, du talc, de l'argile et de la silice.

3. Film réceptif aux encres/aux colorants selon la revendication 2, dans lequel le polymère acrylique contient 5 pour cent en poids à 20 pour cent en poids de monomères d'oléfine aliphatique insaturée, 55 pour cent en poids à 95 pour cent en poids de monomères d'acrylate et 0,4 pour cent en poids à 25 pour cent en poids de monomères éthyléniquement insaturés supplémentaires, ou dans lequel le polymère acrylique contient 10 pour cent en poids à 15 pour cent en poids de monomères d'oléfine aliphatique insaturée, 75 pour cent en poids à 90 pour cent en poids de monomères d'acrylate et 0,7 pour cent en poids à 10 pour cent en poids de monomères éthyléniquement insaturés supplémentaires.

4. Film réceptif aux encres/aux colorants selon la revendication 1, dans lequel le polymère acrylique contient jusqu'à 2 pour cent en poids d'un agent de réticulation.

5. Film réceptif aux encres/aux colorants selon la revendication 2, dans lequel le monomère d'oléfine aliphatique insaturée est le 2,4,4-triméthyl-1-pentène.

6. Film réceptif aux encres/aux colorants selon la revendication 4, dans lequel l'agent de réticulation est choisi dans le groupe constitué du divinyl benzène, du diacrylate de 1,6-hexanediol, du diacrylate d'hexanediol propoxylé, du diacrylate de dipropylène glycol, du triacrylate de triméthylolpropane, du triacrylate de triméthylolpropane éthoxylé, du diacrylate de butanediol, du diacrylate de 6-hexanediol, du diacrylate d'éthoxylat de bisphénol A, du diacrylate de polyéthylène glycol 200, du diacrylate de tripropylène glycol, du diacrylate de propoxylat de néopentyl glycol, du diacrylate d'éthoxylat de néopentyl glycol, d'un diacrylate d'éthoxylat aliphatique, d'un diacrylate aliphatique, du diacrylate de dipropylène glycol, du diacrylate d'éthoxylat de bisphénol A, du diacrylate d'éthoxylat de 1,6-hexanediol, du diacrylate de propoxylat de 1,6-hexanediol, du triacrylate de propoxylat de triméthylolpropane, du triacrylate d'éthoxylat de triméthylolpropane, d'un diacrylate aliphatique, du tétraacrylate de ditriméthylolpropane, du pentaacrylate de dipentaérythritol, du diacrylate de tripropylène glycol, du triacrylate de propoxylat de glycéryle, du pentaacrylate de ditriméthylolpropane, d'un triacrylate d'uréthane aliphatique, d'un diacrylate d'uréthane aliphatique, d'un hexaacrylate d'uréthane aromatique, d'un diacrylate d'uréthane aromatique, du diacrylate d'éthoxylat de monométhoxy triméthylolpropane et du diacrylate de tripropylène glycol.

7. Film réceptif aux encres/aux colorants selon la revendication 5, dans lequel le monomère d'acrylate est l'acrylate d'éthyle.

8. Film réceptif aux encres/aux colorants selon la revendication 7, dans lequel le monomère éthyléniquement insaturé supplémentaire est l'acide méthacrylique.

9. Tissu réceptif aux encres/aux colorants comprenant un tissu de base composé de filaments qui sont composés d'une polyoléfine et de 0,1 pour cent en poids à 50 pour cent en poids d'au moins une charge, lequel tissu de base est revêtue d'un polymère d'acrylate, dans lequel le polymère d'acrylate est composé de (a) 1 pour cent en poids à 20 pour cent en poids de motifs répétitifs d'au moins un monomère d'oléfine aliphatique insaturée contenant de 4 à 30 atomes de carbone, (b) 50 pour cent en poids à 99 pour cent en poids de motifs répétitifs d'au moins un monomère d'acrylate et, facultativement, (c) 0,2 pour cent en poids à 30 pour cent en poids de motifs répétitifs d'au moins un monomère éthyléniquement insaturé supplémentaire choisi dans le groupe constitué des acides carboxyliques insaturés, des monomères de méthacrylate, des monomères contenant un groupe nitrile insaturé et des monomères vinyliques.

10. Tissu selon la revendication 9, dans lequel le polymère acrylique contient de 5 pour cent en poids à 20 pour cent en poids de monomères d'oléfine aliphatique insaturée, 55 pour cent en poids à 95 pour cent en poids de monomères d'acrylate et 0,4 pour cent en poids à 25 pour cent en poids de monomères éthyléniquement insaturés supplémentaires.

11. Tissu selon la revendication 10, dans lequel le monomère d'oléfine aliphatique insaturée est le 2,4,4-triméthyl-1-pentène, dans lequel le monomère d'acrylate est l'acrylate d'éthyle, et dans lequel le monomère éthyléniquement insaturé supplémentaire est l'acide méthacrylique.

12. Tissu réceptif aux encres/aux colorants selon la revendication 11, dans lequel le tissu de base est un tissu tissé, ou dans lequel le tissu de base est un tissu non tissé.

13. Tissu réceptif aux encres/aux colorants selon la revendication 11, dans lequel la charge est présente dans le tissu de base à un taux qui est dans la plage de 0,25 à 12 pour cent en poids, et dans lequel la charge est choisie dans le groupe constitué de la terre de diatomée, du dioxyde de titane, du carbonate de calcium, du talc, de l'argile et de la silice.

14. Procédé de traitement d'un film réceptif aux encres/aux colorants ou d'un tissu réceptif aux encres/aux colorants pour le rendre plus réceptif aux encres/aux colorants, dans lequel ledit film réceptif aux encres/aux colorants et ledit tissu réceptif aux encres/aux colorants sont composés d'un film de base ou d'un tissu de base composé de polyoléfine et de 0,1 pour cent en poids à 50 pour cent en poids d'au moins une charge, dans lequel le procédé comprend le revêtement du film de base ou de le tissu de base avec un polymère d'acrylate, dans lequel le polymère d'acrylate est composé de (a) 1 pour cent en poids à 20 pour cent en poids de motifs répétitifs d'au moins un monomère d'oléfine aliphatique insaturé contenant de 4 à 30 atomes de carbone, (b) 50 pour cent en poids à 99 pour cent en poids de motifs répétitifs d'au moins un monomère d'acrylate et, facultativement, (c) 0,2 pour cent en poids à 30 pour cent en poids de motifs répétitifs d'au moins un monomère éthyléniquement insaturé supplémentaire choisi dans le groupe constitué des acides carboxyliques insaturés, des monomères de méthacrylate, des monomères contenant un groupe nitrile insaturé et des monomères vinylique.
